(19) Europäisches Patentamt
European Patent Office
Office européen des brevets

(11) EP 1 418 253 B1

(12) FASCICULE DE BREVET EUROPEEN

(45) Date de publication et mention de la délivrance du brevet:
**07.07.2010 Bulletin 2010/27**

(51) Int Cl.:
***C23F 11/10*** *(2006.01)* ***C02F 5/10*** *(2006.01)*
***C23F 11/14*** *(2006.01)* ***C02F 5/12*** *(2006.01)*

(21) Numéro de dépôt: **03292758.4**

(22) Date de dépôt: **04.11.2003**

(54) **Composition inhibitrice d'entartrage et de corrosion de circuits d'eau et procédé d'inhibition**

Kesselstein- und Korrosionsinhibitor und Verfahren für Wasserkreisläufe

Scale and corrosion inhibitor composition and process for water circuits

(84) Etats contractants désignés:
**AT BE BG CH CY CZ DE DK EE ES FI FR GB GR HU IE IT LI LU MC NL PT RO SE SI SK TR**

(30) Priorité: **06.11.2002 FR 0213880**

(43) Date de publication de la demande:
**12.05.2004 Bulletin 2004/20**

(73) Titulaire: **BK Giulini GmbH**
**67065 Ludwigshafen (DE)**

(72) Inventeur: **Moran, Francis**
**75019 Paris (FR)**

(56) Documents cités:
**EP-A- 0 065 609**
**EP-A- 0 134 365**
**WO-A-96/04411**
**US-A- 3 696 048**
**US-A- 4 250 042**

- **PATENT ABSTRACTS OF JAPAN vol. 005, no. 120 (C-065), 4 août 1981 (1981-08-04) & JP 56 055575 A (MITSUBISHI HEAVY IND LTD;OTHERS: 01), 16 mai 1981 (1981-05-16)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### *Domaine de l'invention*

La présente invention a trait à une nouvelle composition inhibitrice d'entartrage et de corrosion, qui contient au moins un composé dicarboxylique de formule I ci-après pour protéger les surfaces métalliques de circuits ou installations où circule de l'eau en tant que fluide énergétique ou thermique.

### *Art antérieur*

On sait que les composés dicarboxyliques de formule Io :

$$XOOC\text{-}(CH_2)_n\text{-}COOX \qquad (Io)$$

où n est un nombre entier tel que $5 \leq n \leq 12$, et X est H ou un atome de métal alcalin, et leurs mélanges ont déjà été préconisés en tant qu'agents inhibiteurs de corrosion.

On connaît en particulier le produit commercialisé par la société dite DUPONT sous la nomenclature de "Corfree® M1", qui est une association de composés de formule Io où X est H et n est supérieur à 5. Plus précisément ce produit est un mélange renfermant :

38-40 % en poids d'acide dodécanedioïque,
35-38 % en poids d'acide undécanedioïque, et
6-7 % en poids d'acide sébacique.

Il se trouve que les composés de formule Io sont, en tant qu'inhibiteurs de corrosion, efficaces vis-à-vis de l'aluminium mais guère efficaces vis-à-vis du fer, d'une part, et insuffisamment efficaces, en tant qu'inhibiteurs d'entartrage, d'autre part. Voir à cet effet les essais comparatifs fournis plus loin. En outre, on observe que les acides polycarboxyliques sont des substances stimulant la corrosion du fer au fur et à mesure que leur concentration augmente.

On connaît également du brevet US-A-4250042 un sel d'ammonium en tant qu'inhibiteur de corrosion pour les systèmes de forage en milieu aqueux. Il s'agit d'un sel d'un acide polycarboxylique (ayant 2 à 3 fonctions COOH par molécule) avec $NH_3$, $H_2NCH_2CH_2OH$, $HN(CH_2CH_2OH)_2$ ou une monoamine aliphatique [notamment la di(octadécényl) amine visée à l'exemple 6 dudit brevet US].

Il se trouve que le mélange aqueux obtenu à partir d'un acide polycarboxylique et d'une monoamine grasse est insuffisamment efficace vis-à-vis de la corrosion des surfaces métalliques en fer ou contenant du fer, qui sont destinées à être en contact avec de l'eau utilisée comme fluide énergétique ou thermique. Voir lesdits essais comparatifs.

On connaît enfin d'autres compositions anticorrosion qui sont des mélanges binaires du type sel d'ammonium (provenant notamment de la réaction d'un acide dicarboxylique avec une amine)/autre ingrédient ou des mélanges ternaires du type acide dicarboxylique/sel d'amine/autre ingrédient. En particulier on connaît de :

- WO-A-84/04323, une composition aqueuse ternaire acide dicarboxylique/sel d'amine/acide borique ou composé contenant du bore,
- US-A-3696048, une composition aqueuse (1°) d'un sel d'un acide dicarboxylique avec une amine grasse (notamment une polyamine grasse selon l'exemple dudit brevet US-A-3696048) et (2°) d'un alkylphénol polyoxyalkyléné, et
- FR-A-2180481, une composition aqueuse (1°) d'un sel d'un acide dicarboxylique (en $C_{10}$-$C_{50}$) avec une monoamine grasse (en $C_{10}$-$C_{30}$) et (2°) d'une amine ($\leq C_{10}$).

### *But de l'invention*

Selon l'invention, on se propose de fournir une nouvelle solution technique permettant d'inhiber la corrosion et l'entartrage des surfaces métalliques en contact avec de l'eau, agent corrosif, intervenant en tant que fluide énergétique ou thermique, d'une part, et d'améliorer (i) les propriétés anticorrosion des composés dicarboxyliques précités vis-à-vis du fer sans diminution substantielle de leurs propriétés anticorrosion vis-à-vis du cuivre, et (ii) les propriétés anti-tartre desdits composés dicarboxyliques, d'autre part.

### *Objet de l'invention*

La solution technique que l'on préconise selon l'invention met en oeuvre, pour résoudre le problème lié à l'insuffisance des propriétés anticorrosion et anti-tartre des composés polycarboxyliques, une composition aqueuse

contenant un composant dicarboxylique (DC), un composant polyamine (AF) et, le cas échéant, un composant tensioactif (TA) en tant que produit dispersant.

La composition inhibitrice d'entartrage et de corrosion pour protéger les surfaces métalliques d'installations utilisant de l'eau en tant que fluide énergétique ou thermique, qui contient un composant dicarboxylique (DC) et un composant polyamine grasse (AF), plus le cas échéant un composant tensioactif (TA), est caractérisée en ce qu'elle comprend :

(A) un composé dicarboxylique (DC) choisi parmi l'ensemble constitué par :

(a) les composés de formule I :

$$Z_1OOC\text{-}(CH_2)_n\text{-}COOZ_2 \qquad (I)$$

dans laquelle

n est un nombre entier tel que $5 \leq n \leq 12$, et $Z_1$ et $Z_2$, identiques ou différents, représentent chacun un atome d'hydrogène, un atome d'un métal alcalin (notamment Na ou
K), un groupe ammonium (notamment $NH_4^+$) ou un groupe alkyle en $C_1$-$C_4$, et

(b) leurs mélanges, et

(B) au moins un composé polyamine grasse (AF) de formule II :

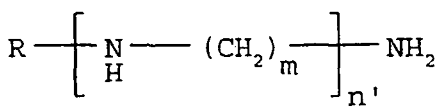

(II)

dans laquelle

R représente un radical hydrocarboné aliphatique saturé ou insaturé en $C_{12}$-$C_{22}$,
m représente un nombre entier ayant une valeur comprise entre 2 et 8 inclus, et
n' représente un nombre entier ayant une valeur comprise entre 1 et 7 inclus.

***Description détaillée de l'invention***

Les composés dicarboxyliques peuvent être utilisés tels qu'ils sont fournis dans le commerce, seuls ou mélangés entre eux, sous leurs formes pures ou techniques. En pratique, ces composés DC sont fournis mélangés entre eux, sous forme solide, comme cela est le cas du produit Corfree® M1 précité. En pratique, on préfère selon l'invention faire appel aux sels de formule I ($Z_1 = Z_2$ = Na, K ou $NH_4^+$) plutôt qu'aux acides correspondants ($Z_1 = Z_2$ = H), lesdits sels étant en général plus hydrosolubles que lesdits acides.

Le composant AF est un produit connu dans la technique sous la nomenclature d'amine fumante. Ledit composant AF peut être constitué d'une ou plusieurs polyamines grasses. Les substances AF peuvent être utilisées telles qu'on peut les obtenir dans le commerce, seules ou mélangées entre elles, sous leurs formes pures ou techniques. Parmi les polyamines commercialisées qui conviennent, on peut notamment citer les produits connus sous les noms de marque : NORAM®, DUOMEEN®, DINORAM®, TRINORAM®, POLYRAM®, LILAMIN® et CEMULCAT® qui renferment au moins une polyamine de formule II. Parmi ces derniers produits, on peut mentionner le "DINORAM® O" qui renferme approximativement 75 % en poids sec d'oléylaminopropylèneamine, 9% en poids sec de stéarylaminopropylèneamine et 6 % en poids sec d'hexadécylaminopropylèneamine.

De façon avantageuse,
(C) un composant tensioactif (TA) sera associé au mélange du composant DC et du composant AF.

D'un point de vue pratique la composition selon l'invention contiendra avantageusement dans de l'eau :

(A) 10 à 200 parties en poids de composant DC,
(B) 1 à 50 parties en poids de composant AF, et
(C) 1 à 10 parties en poids de composant TA.

Le composant TA est choisi parmi l'ensemble constitué par les tensioactifs ioniques, les tensioactifs non-ioniques et leurs mélanges. Parmi les composés TA, qui conviennent ici en tant que produits dispersants, on peut notamment utiliser les composés cités dans l'article de J. PARIS, Labo-Pharma Problèmes et Techniques, 1976, 258, 861-874 et leurs mélanges.

Parmi ces composés, on recommande (i) les composés C1 et C2 définis ci-après, et (ii) leurs mélanges. On préfère ici plus particulièrement

(C1) les composés ammonium quaternaire du type alkyldiméthylammonium qui répondent à la formule III :

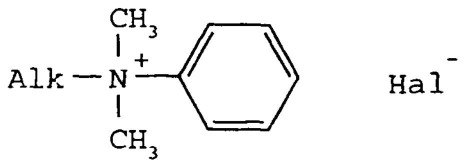 (III)

où Alk est un reste alkyle en $C_6$-$C_{22}$ à chaîne hydrocarbonée linéaire ou ramifiée, et Hal est un atome d'halogène (de préférence le chlore), et leurs mélanges.
Des chlorures d'alkyldiméthylbenzylammonium de formule III ci-dessus sont notamment commercialisés sous les noms de marque : NORAMIUM® DA 50, CATIGENE® OM 50, CATIGENE® OM 100, DODIGENE® 226, DODIGENE® 1828, DODIGENE® 5462 et EMCOL® CC 36.
Le cas échéant, on peut substituer à une portion du composé C1 ou ajouter audit composant C1 :
(C2) au moins un composé amine oxyalkylénée de formule IV :

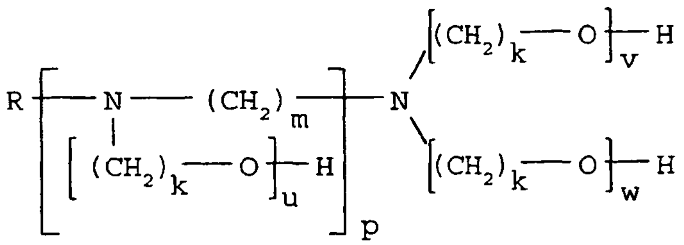 (IV)

dans laquelle

R et m sont définis comme indiqué ci-dessus,
k est un nombre entier ayant pour valeur 2 ou 3,
p représente un nombre entier ayant une valeur comprise entre 0 et 7 inclus,
u, v et w sont des nombres entiers tels que la somme v + w + (up) soit comprise entre 2 et 22.

D'autres substances peuvent, si cela est nécessaire, être incorporées dans le mélange selon l'invention, notamment un composant polyélectrolyte (PE) du type polyacrylique (ou polyacrylate), polyméthacrylique (ou polyméthacrylate) ou polymaléique (ou polymaléate), tel que décrit dans EP-A-0065609, et/ou du type polysulfonique (ou polysulfonate), tel que décrit dans WO-A-96/04411, d'une part, et un composant amine alcalinisante (AA), qui est volatil et qui comprend la cyclohexylamine, la morpholine, les aminoalcools et les dérivés d'hydroxylamine (tels que la N,N-diéthylhydroxylamine et la N-isopropylhydroxylamine) qui sont visés dans WO-A-96/04411, d'autre part.
On peut encore ajouter à la composition selon l'invention un inhibiteur de corrosion pour le cuivre, notamment le benzotriazole, le tolyltriazole et/ou le mercaptobenzothiazole. Un tel ajout est intéressant si le circuit devant être protégé comporte des portions en acier, en aluminium et en cuivre.
La composition aqueuse selon l'invention est obtenue par mélange des composants DC, AF et éventuellement TA dans de l'eau (soit de l'eau du robinet, soit de l'eau distillée ou déminéralisée) avec s'il y a lieu l'un ou plusieurs des autres composants. Cette composition est introduite dans le circuit d'eau à protéger au niveau de la bâche alimentaire.
De façon pratique, le mélange aqueux DC + AF + C1 donne de bons résultats en ce qui concerne l'inhibition de la corrosion et de l'entartrage. S'il y a lieu, on peut encore améliorer l'inhibition de l'entartrage en ajoutant dans ce mélange un composant PE.
Le meilleur mode de mise en oeuvre de l'invention consiste à introduire, au niveau de la bâche alimentaire du circuit à protéger de l'inhibition et de l'entartrage, une composition contenant pour 1 litre d'eau :

(A) 10 à 200 mg de composant DC,
(B) 1 à 50 mg de composant AF, et
(C1) 1 à 10 mg de chlorure d'alkyldiméthylbenzylammonium.

De façon pratique, on recommande pour limiter la corrosion vis-à-vis du fer que peut induire le composant DC quand sa concentration augmente, que dans le circuit d'eau à protéger (où l'eau est un fluide corrosif thermique ou énergétique), dans lequel la composition aqueuse inhibitrice de corrosion et d'entartre selon l'invention est introduite, la concentration finale en composant DC soit inférieure ou égale à 15 mg/l. Si la concentration finale en composant DC dans le circuit d'eau que l'on veut protéger était supérieure à 15 mg/l, on aurait intérêt à diluer ladite composition aqueuse inhibitrice de corrosion et d'entartre avant son introduction dans ledit circuit.
D'autres avantages et caractéristiques de l'invention seront mieux compris à la lecture qui va suivre d'exemples de réalisation et d'essais comparatifs. L'ensemble de ces éléments n'est pas limitatif mais est donné à titre d'illustration.
Par commodité, dans lesdits exemples

| | |
|---|---|
| DCa | désigne le produit Corfree® M1 (quantité exprimée en matière sèche) précité, |
| DCb | désigne l'acide dodécanedioïque (n = 10), |
| DCc | désigne l'acide sébacique (n = 8), |
| DCd | désigne l'acide heptanedioïque (n= 5), |
| AFa | désigne l'oléylaminopropylèneamine (quantité exprimée en matière sèche), |
| OyA | désigne l'oléylamine (quantité exprimée en matière sèche), |
| C1a | désigne le chlorure d'alkyldiméthylbenzylammonium (quantité exprimée en matière sèche), qui est le tensioactif du produit NORANIUM® DA 50, |
| MBT | désigne le 2-mercaptobenzothiazole, |
| CP 1 | désigne un produit de comparaison, qui est une composition aqueuse contenant AFa (50 mg/l) et C1a (10 mg/l) tels que définis ci-dessus, et |
| CP 2 | désigne un produit de comparaison, qui est une composition aqueuse contenant DCa (200 mg/l) et OyA (50 mg/l) tels que définis ci-dessus |

***Exemple 1***

On prépare une composition aqueuse contenant pour 1 litre d'eau :

| | |
|---|---|
| DCa | 200 mg/l, |
| AFa | 50 mg/l, |
| C1a | 10 mg/l, et |

de l'eau du robinet pour compléter jusqu'à 1 litre,
en introduisant DCa, AFa et C1a dans une portion de l'eau puis en introduisant le complément d'eau requis.

***Exemple 2***

On procède comme indiqué à l'exemple 1 à partir des quantités suivantes :

| | |
|---|---|
| DCa | 200 mg/l, et |
| AFa | 50 mg/l. |

***Exemple 3***

On procède comme indiqué à l'exemple 1 à partir des quantités suivantes :

| | |
|---|---|
| DCa | 100 mg/l, |
| AFa | 500 mg/l, et |
| Cla | 5 mg/l. |

Les exemples suivants ont été préparés à partir des quantités indiquées pour 1 litre d'eau déminéralisée.

***Exemple 4***

| | |
|---|---|
| DCb | 100 mg/l, |
| DCc | 50 mg/l, |
| AFa | 50 mg/l, et |
| C1a | 10 mg/l. |

***Exemple 5***

| | |
|---|---|
| DCb | 100 mg/l, |
| DCd | 30 mg/l, |
| AF | 50 mg/l, et |
| C1a | 10 mg/l. |

***Exemple 6***

| | |
|---|---|
| DCc | 150 mg/l, |
| DCd | 30 mg/l, |
| AFa | 50 mg/l, et |
| C1a | 5 mg/l. |

***Exemple 7***

| | |
|---|---|
| DCa | 200 mg/l, |
| AFa | 50 mg/l, |
| C1a | 10 mg/l, et |
| MBT | 20 mg/l. |

***Exemple 8***

| | |
|---|---|
| DCc | 200 mg/l, |
| AFa | 50 mg/l, |
| C1a | 10 mg/l, et |
| MBT | 20 mg/l. |

***Essais anticorrosion et anti-tartre sur pilote***

On a résumé ci-après les essais anticorrosion ($\alpha$) et anti-tartre ($\beta$), qui ont été entrepris, et produits les résultats obtenus, pour mettre en évidence la synergie de la composition selon l'invention, au moyen d'une installation pilote représentée par la figure 1.

($\alpha$) L'eau contenue dans le bac récepteur (ou bâche alimentaire) référencé B d'un aéroréfrigérant 1 transite par un

ballon 2 de deux litres dans lequel elle est chauffée à la température de l'essai (régulation par thermomètre à contact et boîtier de régulation électronique). Ce premier système de chauffage référencé $R_1$ peut amener l'eau à 60°C pour les besoins de l'essai. Si nécessaire, ledit bac récepteur reçoit de l'eau d'appoint selon 6. On trouve ensuite un système de recirculation de l'eau à l'aide d'une pompe 3 dont on peut faire varier le débit à l'aide de la vanne référencée V. Le débit de l'eau dans le circuit est mesuré au moyen d'un débitmètre référencé D. Un système référencé $R_2$ permet, le cas échéant, le chauffage de l'eau à une température supérieure ou égale à la température fournie par $R_1$. A ce niveau, l'eau baigne la paroi extérieure d'un tube de chauffage en acier, qui permet de mesurer les incrustations sur paroi chaude et de les analyser par la suite. Un tube porte-éprouvettes 5 permet la mise en place de plaquettes ou tubes témoins pour détermination de la corrosivité de l'eau à la température de $R_2$.
A la sortie dudit tube 5, l'eau du circuit est dirigée selon la conduite 7 vers le système de refroidissement de l'eau (fonctionnant par échangeur air/eau) de l'aéroréfrigérant 1 avant son recyclage.
Le volume total du circuit est de 15 litres.
Le circuit pilote comporte également des dispositifs de mesure du pH et des dispositifs de prélèvement non représentés, pour analyse chimique de l'eau en circulation.
Les essais ont été réalisés avec des éprouvettes en acier (de type XC 35) et des éprouvettes en aluminium (aluminium 2017).
Les mesures de pertes de poids des éprouvettes $\Delta P$ ont été traduites en vitesse de corrosion V selon la relation :

$$V = \frac{10.\Delta P.365}{J.S.d}$$

dans laquelle

V = vitesse de corrosion exprimée en $\mu$m/an ;
$\Delta P$ = perte de poids exprimée en milligrammes ;
J = nombre de jours d'exposition au milieu agressif ;
S = surface externe de l'éprouvette exprimée en $cm^2$ ;
d = masse spécifique du métal de l'éprouvette exprimée en $g/cm^3$.

L'efficacité inhibitrice (pourcentage d'inhibition) $E_1$ est définie par la relation :

$$E_1\ \% = \frac{Vo-V}{Vo} x\ 100$$

où V et Vo représentent la vitesse de corrosion avec et, respectivement, sans inhibiteur.
Les résultats des essais anticorrosion, qui ont été obtenus avec le dispositif pilote de la figure 1 en utilisant comme fluide agressif de l'eau déminéralisée contenant NaCl, à raison de:

200 g/l de NaCl pour le fer (acier au carbone XC 35), ou
82 g/l de NaCl pour l'aluminium (aluminium 2017),

et maintenue à température ambiante (20°C) pendant une durée de 120 h avec un débit de fluide de 800 l/h, sont consignés dans le tableau I donné plus loin.
(β) Les essais anti-tartre ont été effectués avec le dispositif pilote de la figure 1, avec la différence que le tube porte-éprouvettes 5 a été enlevé. Les mesures ont été effectuées sur la prise de poids de la résistance chauffante $R_2$. Le fluide corrosif utilisé est identique à celui des essais anticorrosion : eau déminéralisée contenant

200 g/l de NaCl pour étude du fer (acier au carbone XC 35), ou
82 mg/l de NaCl pour étude de l'aluminium (aluminium 2017).

Les mesures sont effectuées à 90°C au niveau de $R_2$, l'eau du circuit étant préalablement chauffée à 60°C au niveau de $R_1$, le débit étant de 800 l/h.

L'efficacité inhibitrice (pourcentage d'inhibition) $E_2$ est définie ici par la relation :

$$E_2\ \% = \frac{Po\text{-}P}{Po} \times 100$$

où P et Po représentent le taux d'encrassement (exprimé en $g/m^2/j$) de la résistance $R_2$ avec et, respectivement, sans inhibiteur.

Les résultats obtenus après 100 h d'encrassement ont été consignés dans le tableau II ci-après en ce qui concerne la protection du fer vis-à-vis de l'entartrage.

***Essais électrochimiques***

Des essais électrochimiques ont été réalisés avec un second dispositif pilote illustré schématiquement par la figure 2. Ladite figure 2 représente un montage utilisé pour les mesures d'impédance. Le dispositif pilote comprend une cellule de mesures à 3 électrodes 20, 21 et 22, un potentiostat-galvanostat 12, un analyseur de fonction de transfert 13 et un oscilloscope 16 à deux voies. Le potentiel E de l'électrode de travail 20 est mesuré par rapport à une électrode de référence 22 au calomel saturée. Le courant I et le potentiel E sont contrôlés par le potentiostat 12 (SOLARTRON® 1286). Dans le cas où on impose un potentiel constant à l'électrode de travail 20, la mesure de l'intensité de courant qui traverse la cellule se fait à l'aide d'une contre-électrode 21 et d'une résistance étalon qui peut varier de 10 Ω à 1 MΩ. La valeur de cette résistance doit être proche de la valeur de l'impédance mesurée.

A la tension E de polarisation délivrée par le potentiostat 12, le générateur de l'analyseur de fonction de transfert 13 (SOLARTRON® 1250) permet de superposer un signal sinusoïdal de faible amplitude. L'analyseur calcule la partie réelle et la partie imaginaire de l'impédance complexe mesurée. La gamme de fréquences exploitées s'étend de 65 kHz à quelques mHz.

Un filtre double-voie 15 est utilisé pour améliorer la qualité des signaux obtenus notamment aux basses fréquences, en diminuant le rapport signal/bruit et pour fournir ainsi des mesures plus rapides. Le dispositif est généralement complété (comme indiqué plus haut) par un oscilloscope 16 à deux voies permettant le contrôle des signaux, en particulier leur amplitude et leur décalage à la composante continue.

Les essais sont réalisés en plusieurs exemplaires (au moins trois fois) afin de contrôler leur reproductibilité. Les courbes courant/tension sont tracées point par point à partir du potentiel de corrosion, en mode potentiostatique, dans le domaine anodique ou cathodique. Ces courbes sont corrigées de la chute ohmique calculée à partir des diagrammes d'impédance. Les densités de courant sont obtenues par extrapolation de la droite de TAFEL, après correction de diffusion sur la courbe cathodique. L'impression est réalisée au moyen de la table traçante 14.

Le dispositif pilote comporte un micro-ordinateur 11 commandant l'ensemble des dispositifs 12, 13 et 14. Le tout est monté et relié en réseau selon la ligne schématique 23.

On opère avec une électrode de travail qui est un cylindre de 1 $cm^2$ de section, en acier au carbone XC 35 (dont la composition en éléments autres que le fer est la suivante : C = 0,35 % en poids, Mn = 0,65 % en poids, Si = 0,25 % en poids et P + S = 0,035 % en poids). Le cylindre est revêtu d'une gaine thermorétractable étanche. L'éprouvette en acier XC 35 est vissée sur un axe de rotation et forme une électrode à disque tournante assurant une agitation constante et homogène au voisinage de la surface de travail. On utilise également une électrode au calomel saturée et une contre-électrode en platine de grande surface.

L'électrolyte contenu dans la cuve 19 est constitué par une solution de 200 mg/l de NaCl dans de l'eau déminéralisée. Le milieu est aéré. Les essais sont réalisés à la température contrôlée de 25°C au moyen du régulateur de température 17 qui fournit la cuve en électrolyte selon la conduite 18. L'eau qui a traversé ladite cuve est évacuée selon la flèche 18.

Les résultats des essais électrochimiques qui ont été obtenus sont consignés dans le tableau III ci-après, dans lequel sont données les valeurs de l'intensité ($I_{CORR}$) du courant de corrosion, qui est exprimée en $\mu$ $A.cm^{-2}$, de la résistance de polarisation ($R_P$), qui est exprimée en $\Omega.cm^2$, et du pourcentage d'efficacité ($E_3$ %) calculé à partir de $I_{CORR}$ selon la relation :

$$E_3\ \% = \frac{I_{CORR}\ \text{(de l'essai à blanc)} - I_{CORR}\ \text{(du produit ou mélange testé)}}{I_{CORR}\ \text{(de l'essai à blanc)}} \times 100$$

L'étude des valeurs de $I_{CORR}$ et de $R_P$ met en évidence l'intérêt de la composition selon l'invention par rapport à l'art antérieur.

Selon l'invention, on vise également l'utilisation d'une composition aqueuse, qui contient un composant dicarboxylique (DC) et un composant amine grasse (AF), plus le cas échéant un composant tensioactif (TA), pour protéger vis-à-vis de l'entartrage et de la corrosion les surfaces métalliques d'installations de circuits d'eau où l'eau intervient en tant que fluide énergétique ou thermique, ladite utilisation étant caractérisée en ce que l'on fait appel à une composition aqueuse comprenant :

(A) un composé dicarboxylique (DC) choisi parmi l'ensemble constitué par :

(a) les composés de formule I :

$$Z_1OOC\text{-}(CH_2)_n\text{-}COOZ_2 \qquad (I)$$

dans laquelle
n, $Z_1$ et $Z_2$ sont définis comme indiqué ci-dessus, et
(b) leurs mélanges, et

(B) au moins un composé polyamine grasse (AF) de formule II :

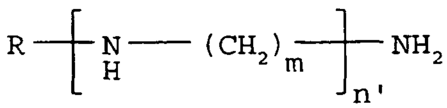

(II)

dans laquelle R, m et n' sont définis comme indiqués ci-dessus.

**TABLEAU I**

| *Essais d'anticorrosion* | | | | | |
|---|---|---|---|---|---|
| Produit | (1) | Vitesse de corrosion (µm/an) | | $E_1$ (%) | |
| | | fer | aluminium | fer | aluminium |
| blanc | - | 865 | 130 | - | - |
| DCa | 100 | 320 | 10 | 63,0 | 92,3 |
| DCa | 200 | 360 | 8 | 58,4 | 93,8 |
| AFa | 50 | 395 | 30 | 54,3 | 76,9 |
| OyA | 50 | 440 | 38 | 49,1 | 70,7 |
| <u>CP 1</u><br>AFa<br>C1a | <br>50<br>10 | 390 | 28 | 54,9 | 78;4 |
| <u>CP 2</u><br>DCa<br>OyA | <br>200<br>50 | 430 | 12 | 50,3 | 90,8 |
| <u>Ex 1</u><br>DCa<br>AFa<br>C1a | <br>50<br>5<br>25 | 80 | 6 | 90,7 | 95,4 |
| <u>Ex 2</u><br>DCa<br>AFa | <br>200<br>50 | 85 | 7 | 90,1 | 94,6 |

(suite)

| Essais d'anticorrosion | | | | | |
|---|---|---|---|---|---|
| Produit | (1) | Vitesse de corrosion (µm/an) | | $E_1$ (%) | |
| | | fer | aluminium | fer | aluminium |
| Note : (1) = concentration en matière sèche (en mg/l) dans la composition aqueuse testée, qui est injectée dans le circuit pilote. | | | | | |

**TABLEAU II**

| *Essais anti-tartre* (acier au carbone XC 35 ; milieu : NaCl 200mg/l) | | |
|---|---|---|
| Produit | Taux d'encrassement ($g/m^2/j$) | $E_2$ (%) |
| blanc | 25 | - |
| DCa (200 mg/l) | 10 | 60 |
| AFa (50 mg/l) | 7 | 72 |
| C1a (10 mg/l) | 24 | 4 |
| Ex 1<br>DCa (200 mg/l)<br>AFa (50 mg/l)<br>C1a (10 mg/l) | 0,8 | 96,8 |
| Ex 2<br>DCa (200 mg/l)<br>AFa (50 mg/l) | 1,0 | 96 |

**TABLEAU III**

| *Essais électrochimiques* | | | |
|---|---|---|---|
| Produit | $I_{CORR}$ ($\mu A.cm^{-2}$) | $R_P$ ($\Omega.cm^2$) | $E_3$ (%) |
| blanc | 100 | 400 | - |
| DCa (200 mg/l) | 25 | 3 890 | 75 |
| CP 1<br>AFa (50 mg/l)<br>C1a (10 mg/l) | 6 | 6 650 | 89 |
| Ex 1<br>DCa (200 mg/l)<br>AFa (10 mg/l)<br>C1a (25 mg/l) | 2 | 30 000 | 98 |

## Revendications

1. Composition inhibitrice d'entartrage et de corrosion pour protéger les surfaces métalliques d'installations utilisant de l'eau en tant que fluide énergétique ou thermique, ladite composition, qui contient un composant dicarboxylique (DC) et un composant amine grasse (AF), plus le cas échéant un composant tensioactif (TA), étant **caractérisée en ce qu'**elle comprend :

(A) un composé dicarboxylique (DC) choisi parmi l'ensemble constitué par :

(a) les composés de formule I :

$$Z_1OOC\text{-}(CH_2)_n\text{-}COOZ_2 \qquad (I)$$

dans laquelle

n est un nombre entier tel que $5 \leq n \leq 12$, et $Z_1$ et $Z_2$, identiques ou différents, représentent chacun un atome d'hydrogène, un atome d'un métal alcalin, notamment Na ou K, un groupe ammonium, notamment $NH_4^+$, ou un groupe alkyle en $C_1$-$C_4$, et

(b) leurs mélanges, et

(B) au moins un composé polyamine grasse (AF) de formule II :

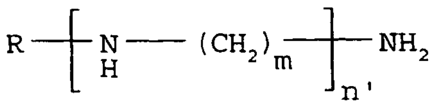 (II)

dans laquelle

R représente un radical hydrocarboné aliphatique saturé ou insaturé en $C_{12}$-$C_{22}$,
m représente un nombre entier ayant une valeur comprise entre 2 et 8 inclus, et
n' représente un nombre entier ayant une valeur comprise entre 1 et 7 inclus.

**2.** Composition suivant la revendication 1, **caractérisée en ce qu'**elle comprend en outre

(C) un composant tensioactif (TA) intervenant en tant que dispersant.

**3.** Composition suivant l'une quelconque des revendications 1 et 2, **caractérisée en ce qu'**elle comprend

(A) 10 à 200 parties en poids de composant DC,
(B) 1 à 50 parties en poids de composant AF, et
(C) 1 à 10 parties en poids de composant TA.

**4.** Composition suivant la revendication 2 ou 3, **caractérisée en ce que** le composant TA est choisi parmi

(C1) les composés ammonium quaternaire du type alkyldiméthylammonium qui répondent à la formule III :

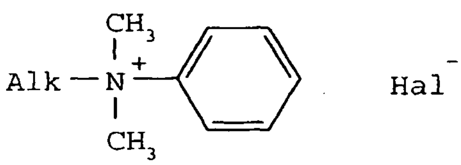 (III)

où Alk est un reste alkyle en $C_6$-$C_{22}$ à chaîne hydrocarbonée linéaire ou ramifiée, et Hal est un atome d'halogène, de préférence le chlore, et leurs mélanges.

**5.** Composition suivant la revendication 2 ou 3, **caractérisée en ce que** le composant TA est

(C2) au moins un composé amine oxyalkylénée de formule IV :

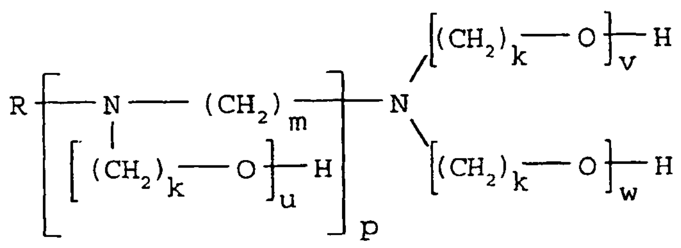 (IV)

dans laquelle

R et m sont définis comme indiqué ci-dessus,
k est un nombre entier ayant pour valeur 2 ou 3,
p représente un nombre entier ayant une valeur comprise entre 0 et 7 inclus,
u, v et w sont des nombres entiers tels que la somme v + w + (up) soit comprise entre 2 et 22.

**6.** Composition suivant la revendication 1, **caractérisée en ce qu'**elle renferme pour 1 litre d'eau :

(A) 10 à 200 mg de composant DC,
(B) 1 à 50 mg de composant AF, et
(C1) 1à 10 mg de chlorure d'alkyldiméthylbenzylammonium.

**7.** Utilisation d'une composition, qui contient un composant dicarboxylique (DC) et un composant amine grasse (AF), plus le cas échéant un composant tensioactif (TA), pour protéger vis-à-vis de l'entartrage et de la corrosion les surfaces métalliques d'installations de circuits d'eau, où l'eau intervient en tant que fluide corrosif énergétique ou thermique, ladite utilisation étant **caractérisée en ce que** l'on fait appel à une composition aqueuse comprenant :

(A) un composé dicarboxylique (DC) choisi parmi l'ensemble constitué par :

(a) les composés de formule I :

$$Z_1OOC\text{-}(CH_2)_n\text{-}COOZ_2 \qquad (I)$$

dans laquelle

n est un nombre entier tel que $5 \leq n \leq 12$, et $Z_1$ et $Z_2$, identiques ou différents, représentent chacun un atome d'hydrogène, un atome d'un métal alcalin, notamment Na ou K, un groupe ammonium, notamment $NH_4^+$, ou un groupe alkyle en $C_1$-$C_4$, et

(b) leurs mélanges, et

(B) au moins un composé polyamine grasse (AF) de formule II :

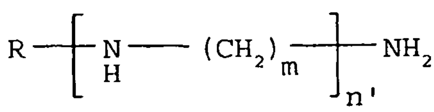 (II)

dans laquelle

R représente un radical hydrocarboné aliphatique saturé ou insaturé en $C_{12}$-$C_{22}$,
m représente un nombre entier ayant une valeur comprise entre 2 et 8 inclus, et
n' représente un nombre entier ayant une valeur comprise entre 1 et 7 inclus,

pour inhiber la corrosion et l'entartrage.

**8.** Utilisation suivant la revendication 7, dans laquelle l'on fait appel à une composition aqueuse comprenant :

(A) 10 à 200 parties en poids de composant DC,
(B) 1 à 50 parties en poids de composant AF, et
(C) 1 à 10 parties en poids de composant TA.

**9.** Utilisation suivant la revendication 7 ou 8, dans laquelle l'on fait appel à une composition comprenant pour 1 litre d'eau :

(A) 10 à 200 mg de composant DC,
(B) 1 à 50 mg de composant AF, et
(C1) 1à 10 mg de chlorure d'alkyldiméthylbenzylammonium.

**10.** Utilisation suivant l'une quelconque des revendications 7 à 9, dans laquelle la concentration en composant DC est telle que, dans le circuit d'eau à protéger vis-à-vis de la corrosion aqueuse et de l'entartrage, la concentration finale en dit composant DC soit inférieure ou égale à 15 mg/l.

**Claims**

**1.** Composition to inhibit deposit of boiler scale and corrosion for protection of metal surfaces of installations using water as an energy-carrying or thermal fluid, said composition containing a dicarboxylic (DC) component and a fatty amine (FA) component and, if required, a tensioactive (TA) component, **characterized in that** it comprises:

(A) A dicarboxylic (DC) compound selected from among compounds including:

(a) compounds with formula I:

$$Z_1OOC\text{-}(CH_2)_n\text{-}COOZ_2$$

in which

n is a integer such that $5 \leq n \leq 12$, and $Z_1$ and $Z_2$, identical or different, each represent a hydrogen atom, an alkaline metal atom (in particular Na or K), an ammonium group (in particular $NH_4^+$) or a $C_1$-$C_4$ alkyl group and

(b) mixtures of these and

(B) at least only fatty polyamine (FA) compound with formula II:

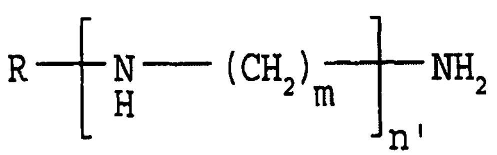

(II)

in which

R is a saturated or unsaturated aliphatic $C_{12}$-$C_{22}$ hydrocarbon radical
m is a integer with a value between 2 and 8, inclusive and
n' is a integer with a value between 1 and 7, inclusive.

**2.** Composition according to Claim 1, **characterized in that** it includes in addition (C) a tensioactive (TA) component acting as a dispersant.

**3.** Composition according to that according to Claim 1 or 2, **characterized in that** it includes

(A) 10 to 200 parts by weight of the DC component
(B) 1 to 50 parts by weight of the FA component and
(C) 1 to 10 parts by weight of the TA component.

**4.** Composition according to Claim 2 or 3, **characterized in that** the TA component is selected from among (C1) quaternary ammonium compounds of the alkyldimethylammonium type matching formula III:

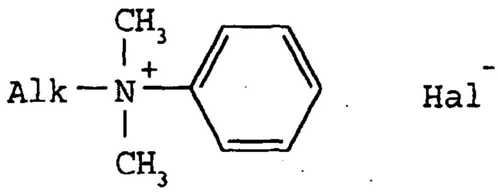

(III)

Whereby Alk is a $C_6$-$C_{22}$ alkylic residue with a linear or branched hydrocarbon chain and Hal is a halogen atom (preferably chlorine), and mixtures thereof.

**5.** Composition according to Claim 2 or 3, **characterized in that** the TA component is (C2) at least one of the oxyalkylenated amine compounds with formula IV:

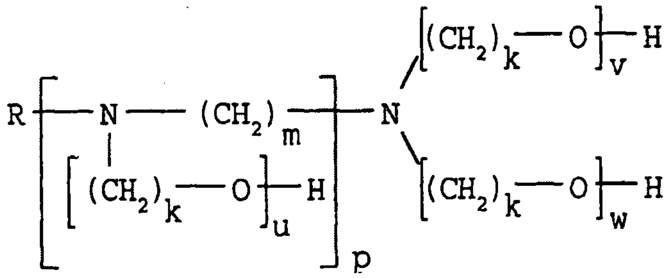

(IV)

whereby

R and m are defined as above,
k is an integer with a value of 2 or 3
p represents a integer with a value between 0 and 7, inclusive
u, v and w are integers such that the sum v + w + (up) is between 2 and 22.

**6.** Composition as per Claim 1, **characterized in that** it contains in 1 litre of water:

(A) 10 to 200 mg of the DC component
(B) 1 to 50 mg of the FA component and
(C1) 1 to 10 mg of aklyldimethylbenzylammonium chloride.

**7.** Utilization of a composition containing a dicarboxylic (DC) component, a fatty amine (FA) component and as required a tensioactive (TA) component, to protect the metal surfaces of water circuit installations from deposits of boiler scale and corrosion in cases in which the water functions as a corrosive energy-carrying or thermal fluid, said utilization **characterized in that** an aqueous composition as follows is used:

(A) A dicarboxylic (DC) compound selected from among compounds including:

(a) compounds with formula I:

$$Z_1OOC\text{-}(CH_2)_n\text{-}COOZ_2$$

in which

n is a integer such that $5 \leq n \leq 12$, and $Z_1$ and $Z_2$, identical or different, each represent a hydrogen atom, an alkaline metal atom (in particular Na or K), an ammonium group (in particular $NH_4^+$) or a $C_1$-$C_4$ alkyl group and

(b) mixtures of these and

(B) at least only fatty polyamine (FA) compound with formula II:

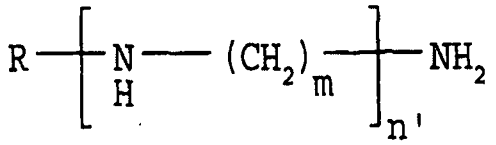

(II)

in which

R is a saturated or unsaturated aliphatic $C_{12}$-$C_{22}$ hydrocarbon radical
m is a integer with a value between 2 and 8, inclusive and
n' is a integer with a value between 1 and 7, inclusive

to inhibit corrosion and scale deposits.

**8.** Utilization according to Claim 7, in which an aqueous composition as follows is used:

(A) 10 to 200 parts by weight of the DC component
(B) 1 to 50 parts by weight of the FA component and
(C) 1 to 10 parts by weight of the TA component.

**9.** Utilization according to Claim 7 or 8, in which a composition is used containing in 1 litre of water:

(A) 10 to 200 mg of the DC component
(B) 1 to 50 mg of the FA component and
(C1) 1 to 10 mg of aklyldimethylbenzylammonium chloride.

**10.** Utilization according any of the Claims 7 to 9, in which the concentration of the DC component is such that, in the water circuit to be protected from water corrosion and scale deposits, the final concentration of said DC component is less than or equal to 15 mg/l.

**Patentansprüche**

**1.** Kalk- und korrosionshemmende Zusammensetzung zum Schutz metallischer Oberflächen von Anlagen, unter Verwendung von Wasser als energetische oder thermische Flüssigkeit. Diese Zusammensetzung, die eine Dicarboxy-Komponente (DC) und eine Fettamin-Komponente (AF) sowie gegebenenfalls eine oberflächenaktive Komponente (TA) enthält, wird durch die folgenden Bestandteile **charakterisiert:**

(A) eine ausgewählte Dicarboxyverbindung (DC), die sich aus Folgendem zusammensetzt:

(a) den Verbindungen gemäß Formel I :

$$Z_1OOC\text{-}(CH_2)_n\text{-}COOZ_2 \qquad (I)$$

wobei

n eine ganze Zahl wie 5 $\leq$n $\leq$12 ist und $Z_1$ sowie $Z_2$ gleich oder unterschiedlich sind und je ein Wasserstoffatom, ein Atom eines alkalischen Metalls (insbesondere Na oder K), eine Ammoniumgruppe (insbesondere $NH_4$+) oder eine Alkylgruppe aus $C_1$-$C_4$,

und (b) deren Mischungen darstellen, und

(B) mindestens eine Verbindung aus Fettpolyaminen (AF) gemäß Formel II:

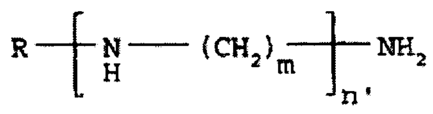

(II)

wobei

R ein offenkettiges, gesättigtes oder ungesättigtes Wasserstoffradikal aus $C_{12}$-$C_{22}$ ist,
m eine ganze Zahl mit einem Wert zwischen 2 und 8, und
n' eine ganze Zahl zwischen 1 und 7.

2. Zusammensetzung gemäß Anspruch 1, **charakterisiert** durch unter anderem (C) eine oberflächenaktive Komponente (TA), die als Dispersionsmittel fungiert.

3. Zusammensetzung gemäß einem der Ansprüche 1 oder 2, **charakterisiert** durch Folgendes:

(A) 10 bis 200 Gewichtsanteile der Komponente DC,
(B) 1 bis 50 Gewichtsanteile der Komponente AF, und
(C) 1 bis 10 Gewichtsanteile der Komponente TA.

4. Zusammensetzung gemäß Anspruch 2 oder 3, **charakterisiert** durch die Auswahl der Komponente TA aus (C1) den quaternären Ammoniumverbindungen vom Typ Alkyldimethylammonium, die in Formel III dargestellt sind:

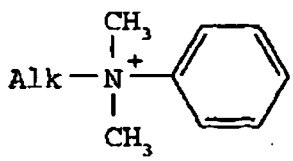

Hal (III)

wobei Alk ein Alkylrest aus $C_6$-$C_{22}$ einer linearen oder verzweigten Kohlenwasserstoffkette und dessen Mischungen ist und Hal ein Halogenatom (bevorzugt Chlor) und dessen Mischungen ist.

5. Zusammensetzung gemäß Anspruch 2 oder 3, **charakterisiert dadurch, dass** diese Komponente TA mindestens (C2) eine oxyalkalinierte Aminverbindung mit der Formel IV ist:

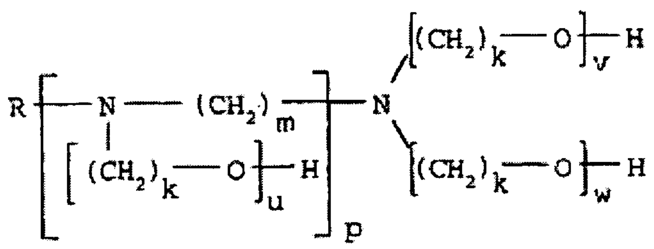

(IV)

wobei

R und m wie oben angegeben sind,
k eine ganze Zahl mit dem Wert 2 oder 3 ist,
p eine ganze Zahl mit einem Wert zwischen 0 und 7 ist,
u, v und w ganze Zahlen wie die Summe v + w + (up) sind, das heißt zwischen 2 und 22 liegen.

**6.** Zusammensetzung gemäß Anspruch 1, **charakterisiert durch** die Bindung folgender Stoffe auf 1 Liter Wasser:

(A) 10 bis 200 mg der Komponente DC,
(B)1 bis 50 mg der Komponente AF, und
(C1) 1 bis 10 mg Chlorid-Alkyldimethylbenzylammonium.

**7.** Verwendung einer Zusammensetzung zum Schutz metallischer Oberflächen von Anlagen vor Kalk und Korrosion in Wasserkreisläufen, in denen das Wasser als energetisches oder thermisches Korrosionsmittel fungiert, die eine Dicarboxy-Komponente (DC) und eine Fettamin-Komponente (AF) sowie gegebenenfalls einen oberflächenaktiven Bestandteil (TA) enthält. Diese Zusammensetzung wird durch die Verwendung einer wässrigen Zusammensetzung mit den folgenden Bestandteilen **charakterisiert:**

(A) eine ausgewählte Dicarboxyverbindung (DC), die sich aus Folgendem zusammensetzt:

(a) den Verbindungen gemäß Formel I :

$$Z_1OOC\text{-}(CH_2)_n\text{-}COOZ_2 \qquad (I)$$

wobei

n eine ganze Zahl wie $5 \leq n \leq 12$ ist und $Z_1$ sowie $Z_2$ gleich oder unterschiedlich sind und je ein Wasserstoffatom, ein Atom eines alkalischen Metalls (insbesondere Na oder K), eine Ammoniumgruppe (insbesondere $NH_4$+) oder eine Alkylgruppe aus $C_1$-$C_4$,

und (b) deren Mischungen darstellen, und

(B) mindestens eine Verbindung aus Fettpolyaminen (AF) gemäß Formel II:

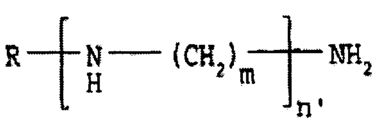

**(II)**

wobei

R ein offenkettiges, gesättigtes oder ungesättigtes Wasserstoffradikal aus $C_{12}$-$C_{22}$ ist,
m eine ganze Zahl mit einem Wert zwischen 2 und 8, und

n’ eine ganze Zahl zwischen 1 und 7.

Damit sollen Korrosion und Verkalkung verhindert werden.

**8.** Verwendung gemäß Anspruch 7, in dem auf eine wässrige Zusammensetzung mit den folgenden Bestandteilen Bezug genommen wird:

(A) 10 bis 200 Gewichtsanteile der Komponente DC,
(B) 1 bis 50 Gewichtsanteile der Komponente AF,
(C) 1 bis 10 Gewichtsanteile der Komponente TA,

**9.** Verwendung gemäß Anspruch 7 oder 8, in dem auf eine Zusammensetzung Bezug genommen wird, die auf 1 Liter Wasser Folgendes enthält:

(A) 10 bis 200 mg von Komponente DC,
(B) 1 bis 50 mg von Komponente AF, und
(C1) 1 bis 10 mg Chlorid-Alkyldimethylbenzylammonium.

**10.** Verwendung gemäß einem der Ansprüche 7 bis 9, in denen die Konzentration von Komponente DC so vorgegeben ist, dass die Gesamtkonzentration der besagten Komponente DC in dem vor wässriger Korrosion oder vor Verkalkung zu schützenden Kreislauf weniger als oder gleich 15 mg/l beträgt.

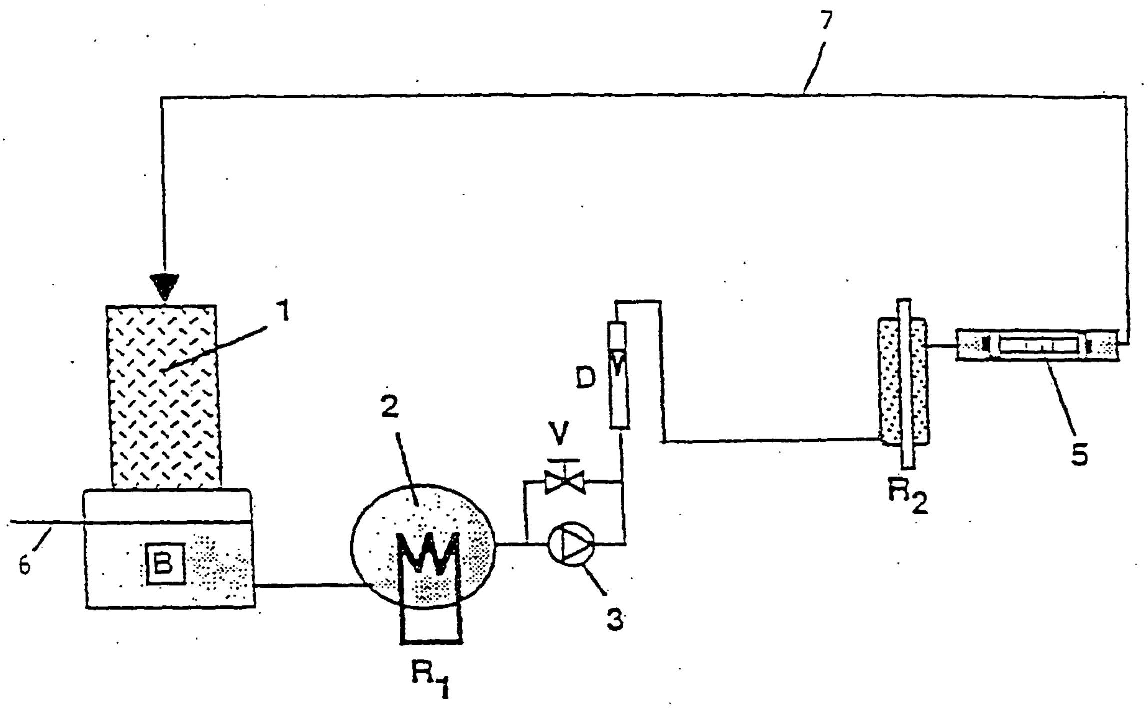


FIG. 1

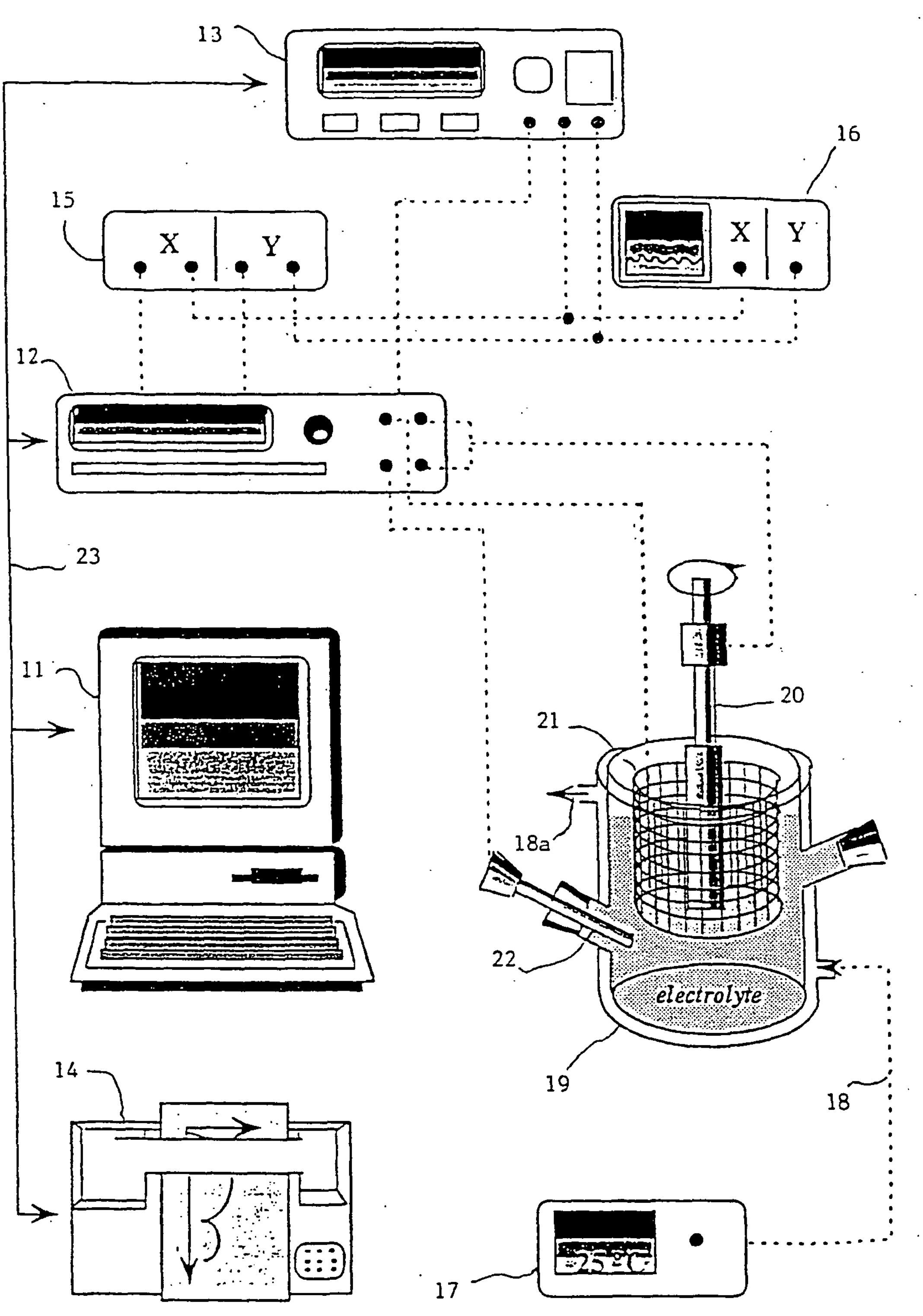


FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4250042 A
- WO 8404323 A
- US 3696048 A
- FR 2180481 A
- EP 0065609 A
- WO 9604411 A


### Littérature non-brevet citée dans la description


- **J. PARIS.** *Labo-Pharma Problèmes et Techniques,* 1976, vol. 258, 861-874